# EUROPEAN PATENT SPECIFICATION

(11) **EP 2 572 049 B1**
(45) Date of publication and mention of the grant of the patent: **12.03.2014**
(21) Application number: 11718697.3
(22) Date of filing: 28.04.2011
(51) Int. Cl.: E03B 3/15, B01D 17/02, B09C 1/00

(54) **AUTOMATIC SUBMERGED DEVICE FOR RECOVERING SUPERNATANTS**
AUTOMATISCHE TAUCHVORRICHTUNG ZUR RÜCKGEWINNUNG VON ÜBERSTÄNDEN
DISPOSITIF SUBMERGÉ AUTOMATIQUE POUR RÉCUPÉRER DES SURNAGEANTS

(30) Priority: 17.05.2010 IT MI20100869
(43) Date of publication of application: 27.03.2013
(73) Proprietor: Hydrogea S.r.l., 46043 Castiglione delle Stiviere (IT)
(72) Inventor: XELLA, Claudio, I-46010 Levata di Curtatone (IT); MUTTI, Francois, I-46043 Castiglione delle Stiviere (IT); ZACCHIA, Filippo, I-46030 Cerese di Virgilio (IT)
(74) Representative: Modiano, Micaela Nadia
(86) International application number: PCT/EP2011/056798
(87) International publication number: WO 2011/144432

(56) References cited:
- WO-A1-90/11410
- FR-A1- 2 855 981
- GB-A- 2 344 180
- US-A- 5 028 212
- US-A- 5 128 052
- US-A- 5 147 184
- US-A- 5 224 837
- US-A- 5 474 685
- US-A- 5 509 479
- US-A1- 2006 225 883
- US-B1- 6 251 286

## Description

### Technical Field

The present invention relates to an automatic submerged device for recovering supernatants.

### Background art

It is well known in many different fields that there can be a liquid which floats on a different liquid. This is the case for example (but not only) in water tables that convey water in the subsoil and which can contain substances, such as for example oils or chemical products with specific weights that are less than that of water, floating on top of the water tables.

In any case, the floating substances are referred to as supernatants, and obviously they must be recovered and collected in order to be disposed of.

The conventional devices designed for this purpose are not completely satisfactory. Examples of such conventional devices are disclosed in documents FR 2 855 981, US 5 509 479, US 5 147 184, US 5 028 212, WO 9 011 410, US 5 128 052, US 5 224 837, US 5 474 685, US 2006 0 225 883, US 6 251 286, GB 2 344 180:

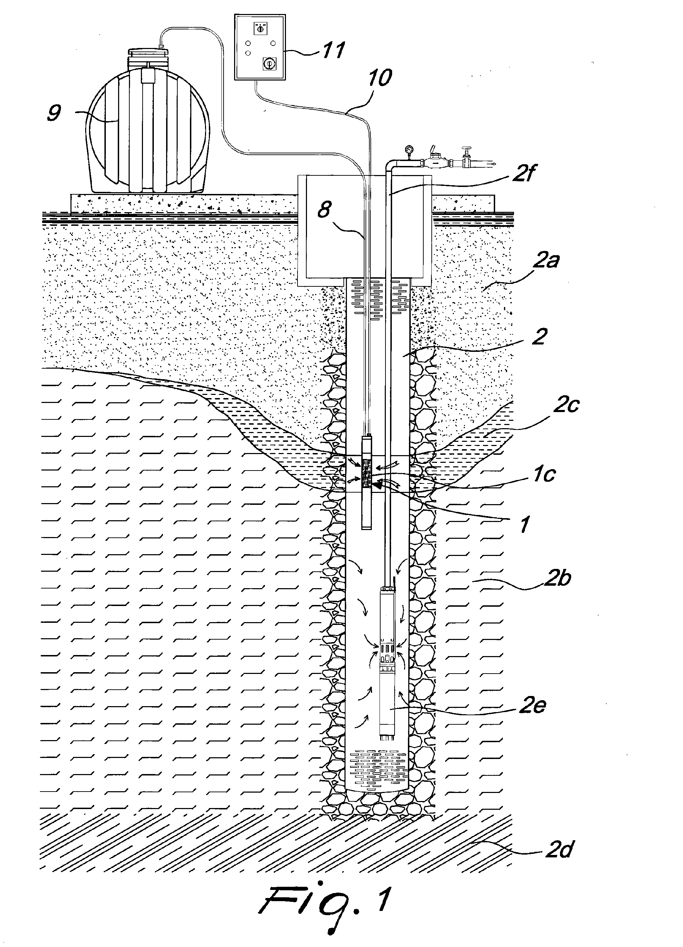

In particular, document FR 2 855 981 A1, which is considered to represent the most relevant state of the art, discloses (the references in parentheses applying to this document): an automatic submerged device for recovering supernatants (page 1, lines 26-28; claim 1, lines 11-13), comprising two floats (Fig.1, reference sign 5A="flotteurs"), which can slide along a guide (Fig.1, reference sign 5C="support"; page 3, lines 31-33) and are adapted to operate in combination with respective sensors (Fig.1, reference sign 5B="capteurs"; these sensors are fixed to the floats: see page 3, lines 22 and 23) which are connected electrically to a panel for managing the operation of the device (page 3, lines 2-5, 18-29; page 4, lines 10-13 -the panel is considered to be implicitly comprised within the device disclosed in D1; Fig.1, reference sign 5="moyens de commande"), the upper float being able to float on the supernatant (Fig.1, reference sign 5A="flotteurs"; page 3, line 1) while the lower float is unable to float on said supernatant but is able to float on water (Fig.1, reference sign 5A="flotteurs"; page 3, line 2), said device further comprising a pump for drawing the supernatant (page 4, lines 21 and 22; Fig.1, reference sign 4="moyens d' extraction"), in which the end of the suction tube is open at a height comprised between the two sensors (Fig.1, reference sign 4A="conduit d' evacuation"; reference sign 2="phase légère", reference signs 58="capteurs") that are fixed to the floats, the floats sliding through the guide (page 3, line 17-29).

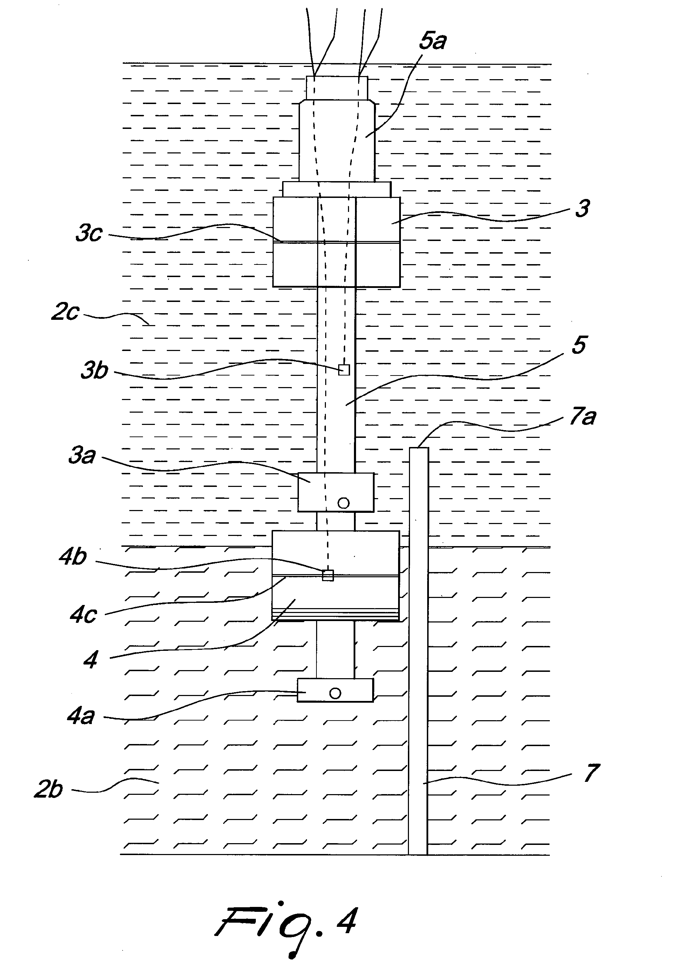

Furthermore, document US 6 251 286 B1 (see Fig.4, reference sign 50="instrument well") discloses that: two floats are comprised within an outer enclosure (see D10, Fig.4, reference sign 50a="outer casing"); the outer enclosure is provided with ports for the passage of the fluids in which said device is immersed (see D10, reference sign 55="small holes"); the sensors are fixed to the guide (see D10, column 5, lines 28-36). However this device, if installed in D1, would not provide the solution described in claim 1, as the holes 55 described in D10 do not enable the oil to pass therethrough (see D10, column 5, lines 13-19). Furthermore, in D10, the pump is not comprised within the outer enclosure (item IV)).

### Disclosure of the invention

The aim of the present invention is to provide a device that is extremely simple in construction and features the utmost safety and efficiency in operation.

This aim is achieved by a submerged device for recovering supernatants, according to the invention, comprising the technical features disclosed in the appended claims.

### Brief description of the drawings

Further characteristics and advantages of the invention will become better apparent from the description of a preferred, but not exclusive, embodiment of the invention, illustrated by way of non-limiting example in the accompanying drawings wherein:
- Figure 1 is a sectional view of a well in which a device according to the invention is operating;
- Figure 2 is a sectional view of the device in the position of rest;
- Figures 3, 4, 5 show key elements of the device in three different operational conditions.

### Ways of carrying out the invention

With reference to the figures, the reference numeral 1 generally designates the device according to the invention inserted in a well 2 which is sunk in an area that features a geological arrangement comprising an upper layer 2a, a water table 2b with a layer 2c of supernatant, which can be any oily substance, floating on the water of the water table 2b, and finally an impermeable layer 2d. A pump 2e, which sucks up water through a duct 2f, is designed to operate in the well 2.

The device 1 comprises, within an outer enclosure 1a provided with ports 1b which are protected by a wire net 1c and permit the entry into the enclosure of the fluids in which the device 1 is submerged, an upper float 3 which is able to float on the supernatant 2c, which has a lower specific weight than that of the water, and a lower float 4 which is ballasted so that it is not able to float on the supernatant 2c but is able to float on the water table 2b. The floats 3, 4 are associated so as to slide with a guide rod 5 which is derived from a support 5a, and in the rest condition they abut against the respective stroke limits 3a, 4a which are fixed to the rod 5.

The reference numerals 3b, 4b designate two electromagnetic sensors that are fixed to the rod 5 and are adapted to operate in combination with metal bands 3c, 4c respectively, which are present on the floats 3 and 4.

The device 1 comprises a pump 6 designed to remove the supernatant 2c, provided with a suction tube 7 the end 7a of which is open at a height comprised between the two sensors 3b, 4b, a condition that ensures, as it will appear from the description of the invention operation, that the pump 6 will suck in neither air nor water, and with a delivery tube 8 which arrives at a tank 9 for collecting the supernatant.

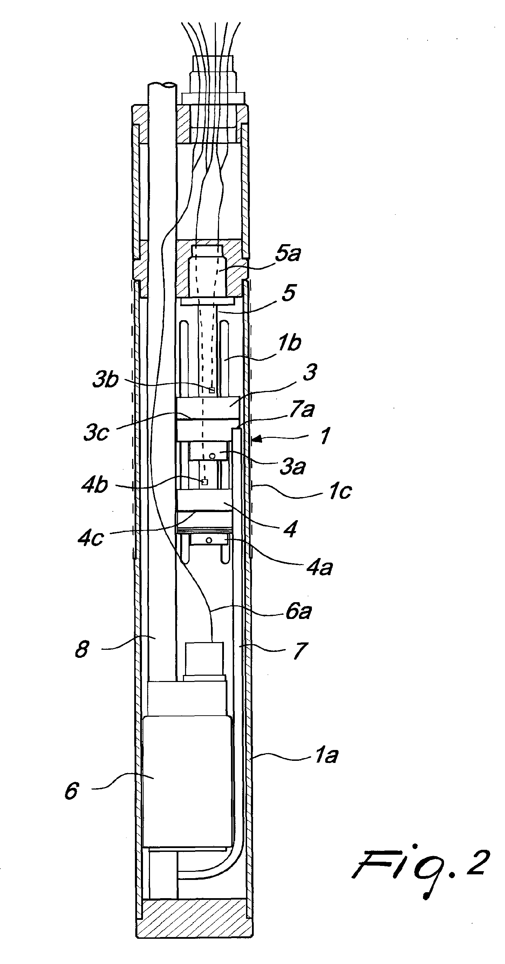

Finally, it should be noted that all the electrical cables that can be seen in Figure 2 which run from the sensors 3b, 4b and from the pump 6 (this last wire is designated with the reference numeral 6a), are collected by a sheath 10 which reaches an electric panel 11.

Operation of the device according to the invention will be described, starting from the situation in which the device 1 begins to be lowered into the well 2: the upper float 3 and the lower float 4 are abutting against the respective stroke limits 3a, 4a, as shown in Figure 2, the device 1 still being surrounded by air.

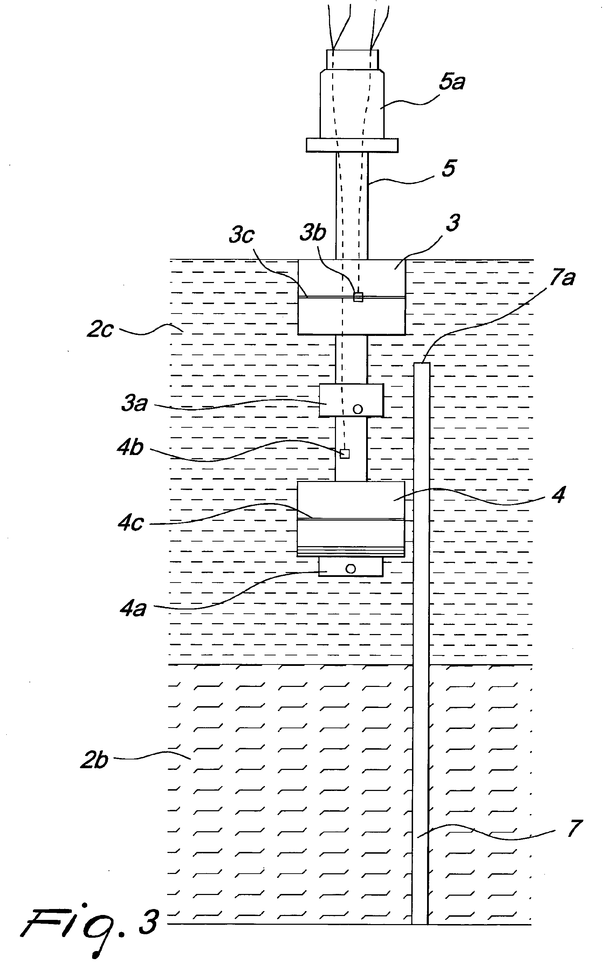

When the device 1 enters the supernatant 2c, the float 4 remains abutting the stroke limit 4a while the float 3 stops because it is floating on the free meniscus of the supernatant; the device 1 continues to descend, and at a certain point the sensor 3b is brought in front of the band 3c, as shown in Figure 3, and then on the panel 11 an indicator light switches on for supernatant.

At this point in time the operator is aware that the device 1 has reached a layer of supernatant. If there is no supernatant, but only water, then the lower float 4 moves first, thus making an indicator light for water switch on, as will be better explained hereinafter, and in this way reporting the lack of supernatant.

At this stage the operator needs to find out the thickness of the layer 2c of supernatant in order to suck it all away, and he/she lowers the device 1 so that immediately the alignment of the sensor 3b with the band 3c is lost, and at a certain point the float 3 is dragged down by the device 1 in its descent because, as can be seen in Figure 4, it is pushed by the support 5a which is integral with the guide rod 5.

During the descent of the device 1, at a certain point the float 4 starts to float on the water and so stops. The device 1 continues to descend, and when the sensor 4b is brought in front of the band 4c, as shown in Figure 4, on the panel 11 the indicator light for water switches on, indicating to the operator that the device 1 is now arranged with the end 7a of the suction tube 7 of the pump 6 at a height comprised within the layer of supernatant 2c, a little above the level of the water table 2b, as shown in Figure 4.

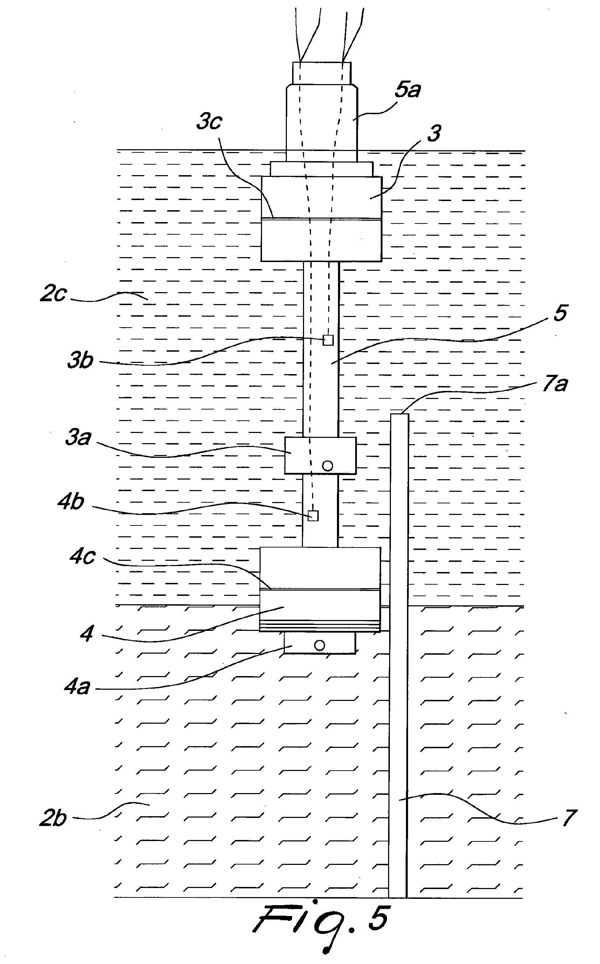

In order to be sure that, following a rise in the level of the water table 2b, water is not sucked up by the pump 6, the operator raises the device 1 as shown in Figure 5 based on his/her experience, and in this way the placing is concluded.

On the 'operator's command, the pump 6 can begin operation, and it will stop either because the float 3 descends, the supernatant having been sucked away, until the band 3c is brought below the sensor 3b, thus guarding against the aspiration of air, or because the float 4, following a rise in the level of the water, has brought the band 4c to the level of the sensor 4b, thus guarding against the aspiration of water.

The device according to the invention is susceptible of numerous modifications and variations, all of which are within the scope of the appended claims. Moreover, all the details may be substituted by other, technically equivalent elements.

This application claims priority from the Italian Patent Application No. MI2010A000869.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An automatic submerged device (1) for recovering supernatants, comprising, within an outer enclosure (1a) provided with ports (1b) for the passage of the fluids in which said device (1) is immersed, two floats (3, 4), which can slide along a guide (5) and are adapted to operate in combination with respective sensors (3b, 4b) which are fixed to said guide (5) and are connected electrically to a panel for managing the operation of the device (1), the upper float (3) being able to float on the supernatant (2c) while the lower float (4) is unable to float on said supernatant but is able to float on water (2b), said outer enclosure (1a) further comprising a pump (6) for drawing the supernatant (2c), the pump (6) being provided with a suction tube (7), wherein the end of the suction tube (7) is open at a height comprised between the two sensors (3b, 4b) that are fixed to the guide (5) for the sliding of the floats.

2. The device according to claim 1, **characterized in that** the sensors (3b, 4b) designed to operate in combination with the floats (3, 4) are of the electromagnetic type.

## Patentansprüche

1. Eine automatische Tauchvorrichtung (1) zur Rückgewinnung von Überständen, die, innerhalb einer äußeren Hülle (1a), die ausgestattet ist mit Öffnungen (1b) für das Hindurchströmen von Flüssigkeiten, in welche die Vorrichtung (1) eingetaucht wird, zwei Schwimmer (3, 4) umfasst, die entlang einer Führung (5) gleiten können und ausgebildet sind, um in Kombination mit entsprechenden Sensoren (3b, 4b) zu arbeiten, welche an der Führung (5) befestigt und elektrisch mit einer Tafel zur Steuerung der Arbeit der Vorrichtung (1) verbunden sind, wobei der obere Schwimmer (3) auf dem Überstand (2c) treiben kann, während der untere Schwimmer (4) nicht auf dem Überstand treiben kann, aber auf Wasser (2b) treiben kann, wobei die äußere Hülle (1a) weiter eine Pumpe (6) zum Abziehen des Überstandes (2c) umfasst, wobei die Pumpe (6) mit einem Saugrohr (7) ausgestattet ist und das Ende des Saugrohrs (7) in einer Höhe offen ist, die zwischen den zwei Sensoren (3b, 4b) liegt, welche an der Führung (5) zum Gleiten der Schwimmer befestigt sind.

2. Die Vorrichtung gemäß Anspruch 1, **dadurch gekennzeichnet, dass** die Sensoren (3b, 4b), die konstruiert sind, um in Kombination mit den Schwimmern (3, 4) zu arbeiten, vom elektromagnetischen Typ sind.

## Revendications

1. Dispositif submergé automatique (1) pour récupérer des surnageants, comportant, à l'intérieur d'une enveloppe extérieure (1a) pourvue d'orifices (1b) pour le passage des fluides dans lesquels est immergé ledit dispositif (1), deux flotteurs (3, 4), lesquels peuvent coulisser le long d'un guide (5) et sont conçus pour coopérer avec des capteurs respectifs (3b, 4b) qui sont fixés audit guide (5) et sont connectés électriquement à un tableau de commande du fonctionnement du dispositif (1), le flotteur supérieur (3) étant apte à flotter sur le surnageant (2c) tandis que le flotteur inférieur (4) n'est pas apte à flotter sur ledit surnageant mais est apte à flotter sur de l'eau (2b), ladite enveloppe extérieure (1a) comportant en outre une pompe (6) pour aspirer le surnageant (2c), la pompe (6) étant munie d'un tuyau d'aspiration (7), l'extrémité du tuyau d'aspiration (7) étant ouverte à une hauteur comprise entre les deux capteurs (3b, 4b) fixés au guide (5) pour le coulissement des flotteurs.

2. Dispositif selon la revendication 1, **caractérisé en ce que** les capteurs (3b, 4b), conçus pour coopérer avec les flotteurs (3, 4), sont du type électromagnétique.
